# EUROPEAN PATENT APPLICATION

(11) **EP 2 708 926 A1**
(43) Date of publication of application: **19.03.2014**
(21) Application number: 12184202.5
(22) Date of filing: 13.09.2012
(51) Int. Cl.: G02B 6/42, G02B 27/28, H04B 10/61

(54) **Optical device**

(71) Applicant: u2t Photonics AG, 10553 Berlin (DE)
(72) Inventor: Matiss, Andreas, 10713 Berlin (DE); Stephan, Jens, 10967 Berlin (DE); Fischer, Andreas, 16556 Hohen Neuendorf (DE); Völker, Benjamin, 14163 Berlin (DE)
(74) Representative: Fischer, Uwe

(57) **Abstract**

An embodiment of the invention relates to an optical component (10, 300) for processing optical signals comprising a rhombic prism (20) having a first surface (SF1), a second surface (SF2) that is parallel to the first surface (SF1), a third surface (SF3) that is angled relative to the first and second surfaces (SF1, SF2) and connects the first and second surfaces (SF1, SF2), and a fourth surface (SF4) that is parallel to the third surface (SF3) and connects the first and second surfaces (SF1, SF2), wherein the third surface (SF3) is covered by a polarization dependent layer (PDL) capable of transmitting radiation having a first polarization and capable of reflecting radiation having a second polarization, said first and second polarizations being perpendicular to each other.

## Description

The invention relates to an optical device for processing optical signals.

### Background of the invention

Publication "Athermal InP-Based 90°-Hybrid Rx OEICs with pin-PDs >60Ghz for Coherent DP-QPSK Photoreceivers" (R. Kunkel, H.-G. Bach, D. Hoffmann, G.G. Mekonnen, R. Zhang, D. Schmidt and M. Schell, IPRM 2010, 22nd International Conference on Indium Phosphide and Related Materials, May 31 - June 4, 2010, Takamatsu Symbol Tower, Kagawa, Japan) discloses an optical device for receiving QPSK-modulated signals. The device does not split polarizations and is not capable of processing polarization-multiplexed signals.

### Objective of the present invention

An objective of the present invention is to provide a compact device which is capable of processing polarization-multiplexed signals.

### Brief summary of the invention

An embodiment of the invention relates to an optical component for processing optical signals, comprising a rhombic prism having a first surface, a second surface that is parallel to the first surface, a third surface that is angled relative to the first and second surfaces and connects the first and second surfaces, and a fourth surface that is parallel to the third surface and connects the first and second surfaces, wherein the third surface is covered by a polarization dependent layer capable of transmitting radiation having a first polarization and capable of reflecting radiation having a second polarization, said first and second polarizations being perpendicular to each other. This embodiment allows processing polarization-multiplexed signals due to polarization splitting provided by the polarization dependent layer. Nonetheless, the device may be fabricated in a very compact way since the polarization dependent layer is placed on a rhombic prism that allows outputting or inputting of separated polarizations with a minimum spatial distance. As such, the different polarizations may be processed with minimum space requirements, and the entire device may be very small.

The optical component may be an optical receiver.

The first surface of the rhombic prism may be configured to allow inputting of at least one optical beam into the receiver. The third surface of the rhombic prism may form a first prism egress for outputting a first portion of the at least one optical beam, said first portion having the first polarization. The third surface may be configured to reflect a second portion of the at least one optical beam towards the fourth surface, said second portion having the second polarization. The fourth surface of the rhombic prism may be configured to reflect the second portion towards the second surface, and the second surface of the rhombic prism may form a second prism egress for outputting the second portion of the at least one optical beam.

The first surface of the rhombic prism preferably provides at least two input ports for inputting at least two parallel optical beams into the receiver. The third surface of the rhombic prism preferably provides at least two prism output ports for outputting the first portion of each of said at least two parallel optical beams, and the second surface of the rhombic prism preferably provides at least two prism output ports for outputting the second portion of each of said at least two parallel optical beams.

The optical component may comprise a first optical receiver unit and a second optical receiver unit.

The second surface of the rhombic prism may be covered with a polarization rotating layer that rotates the polarization of the second portion of each of said at least two parallel optical beams by an angle of 90°. The polarization rotating layer allows signal processing (e. g. reception and demodulation) for two different signal channels, which are polarization-multiplexed outside the optical component, based on a single polarization (e. g. horizontal polarization) inside the optical component. The polarization-demultiplexing is then carried out by the polarization rotating layer and the rhombic prism at the peripheral interface of the optical component.

According to a first preferred embodiment, the prism output ports of the second and third surfaces and the first and second receiver units are connected such that the first receiver unit receives the first portion of a first beam of said at least two parallel optical beams and a first portion of a second beam of said at least two parallel optical beams, and the second receiver unit receives the second portion of the first beam and the second portion of the second beam.

According to a second preferred embodiment, the prism output ports of the second and third surfaces and the first and second receiver units are connected such that the first receiver unit receives the first portion of a first beam of said at least two parallel optical beams and a part of the first portion of a second beam of said at least two parallel optical beams, and the second receiver unit receives the second portion of the first beam and a part of the first portion of the second beam.

According to a third preferred embodiment, the prism output ports of the second and third surfaces and the first and second receiver units are connected such that the second receiver unit receives the second portion of a second beam of said at least two parallel optical beams and a part of the second portion of a first beam of said at least two parallel optical beams, and the first receiver unit receives a part of the second portion of the first beam and the first portion of the second beam.

The first receiver unit is preferably a first coherent optical receiver, and the second optical receiver unit is preferably a second coherent optical receiver.

The at least two prism output ports of the third surface and the first optical receiver unit may be connected via a first group of free-beam connections, and the at least two prism output ports of the second surface and the second optical receiver unit may be connected via a second group of free-beam connections.

The free-beam connections of the first and second group of free-beam connections are preferably equidistant. The distance between adjacent free-beam connections is preferably smaller than 1 mm. A distance of 500µm or less is deemed optimal.

The first optical receiver unit may comprise a MMI coupler having two MMI-ports each of which being connected to one of said at least two prism output ports of the second or third surface. The second optical receiver unit may comprise a second MMI-coupler having two MMI-ports each of which being connected to one of said at least two prism output ports of the second or third surface.

The optical component preferably comprises a second prism providing a fifth surface and a sixth surface, said second prism being arranged in the beam path between the third surface of the rhombic prism and the first optical receiver unit, wherein the fifth surface is parallel to the third surface of the rhombic prism, and wherein the sixth surface is parallel to the first and second surfaces of the rhombic prism. A second prism may be used to achieve parallel beams leaving or entering the second and third surface of the rhombic prism.

The fifth surface of the second prism is preferably mounted on the polarization dependent layer that covers the third surface of the rhombic prism.

Alternatively or in addition, the optical component may be an optical transmitter.

The first surface of the rhombic prism of the transmitter is preferably configured to allow outputting of at least one optical beam that comprises the first and second polarizations, from the transmitter. The third surface of the rhombic prism preferably forms a first prism ingress for inputting at least one optical beam having the first polarization, and the second surface of the rhombic prism preferably forms a second prism ingress for inputting at least one optical beam having the second polarization.

The optical transmitter preferably comprises a second prism providing a fifth surface and a sixth surface, said second prism being arranged in the beam path between the third surface of the rhombic prism and an optical modulator, wherein the fifth surface is parallel to the third surface of the rhombic prism, and wherein the sixth surface is parallel to the first and second surfaces of the rhombic prism.

The first polarization is preferably the horizontal polarization, and the second polarization is preferably the vertical polarization.

The second surface of the rhombic prism or sixth surface of the second rhombic prism is preferably covered with a polarization rotating layer that rotates the polarization of optical radiation by an angle of 90°. The polarization rotating layer may be a half-wave plate. The polarization rotating layer allows signal processing (e. g. beam generation and modulation) for two different signal channels, which are polarization-multiplexed outside the optical component, based on a single polarization (e. g. horizontal polarization) inside the optical component. The polarization-multiplexing is then carried out by the polarization rotating layer and the rhombic prism at the peripheral interface of the optical component.

### Brief description of the drawings

In order that the manner in which the above-recited and other advantages of the invention are obtained will be readily understood, a more particular description of the invention briefly described above will be rendered by reference to specific embodiments thereof which are illustrated in the appended drawings. Understanding that these drawings depict only typical embodiments of the invention and are therefore not to be considered to be limiting of its scope, the invention will be described and explained with additional specificity and detail by the use of the accompanying drawings in which
- Figure 1: shows a first exemplary embodiment of an optical receiver,
- Figure 2: shows an exemplary embodiment of a receiver unit suitable for the optical receiver of Figure 1,
- Figure 3: shows a second exemplary embodiment of an optical receiver,
- Figure 4: shows a third exemplary embodiment of an optical receiver, and
- Figure 5: shows an exemplary embodiment of an optical transmitter.

### Detailed description of the preferred embodiment

The preferred embodiment of the present invention will be best understood by reference to the drawings, wherein identical or comparable parts are designated by the same reference signs throughout.

It will be readily understood that the present invention, as generally described and illustrated in the figures herein, could vary in a wide range. Thus, the following more detailed description of the exemplary embodiments of the present invention, as represented in the figures, is not intended to limit the scope of the invention, as claimed, but is merely representative of presently preferred embodiments of the invention.

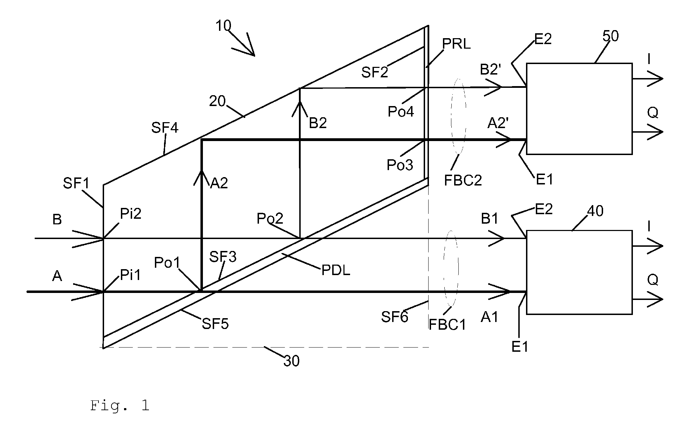

Figure 1 shows a first embodiment of an optical component for processing optical signals. The optical component is an optical receiver 10 and comprises a first prism 20, a second prism 30, and two receiver units 40 and 50.

The first prism 20 is a rhombic prism having a first surface SF1, a second surface SF2, a third surface SF3, and a fourth surface SF4. The second surface SF2 is parallel to the first surface SF1. The third surface SF3 is angled relative to the first and second surfaces SF1 and SF2, and connects the first and second surfaces SF1 and SF2. The fourth surface SF4 is parallel to the third surface SF3, and connects the first and second surfaces SF1 and SF2.

The third surface SF3 is covered with a polarization dependent layer PDL. The polarization dependent layer PDL transmits radiation having a first polarization, and reflects radiation having a polarization perpendicular to the first polarization.

Hereinafter it is assumed in an exemplary fashion that the first polarization is the horizontal polarization and that the second polarization is the vertical polarization.

The second surface SF2 of the rhombic prism 20 is covered with a polarization rotating layer PRL that rotates the polarization of radiation which passes through. The polarization rotating layer PRL rotates the polarization preferably by an angle of 90°. As such, the polarization rotating layer may be a so-called half-wave plate.

The first surface SF1 of the rhombic prism 20 provides two prism input ports Pi1 and Pi2 for inputting two parallel optical beams A and B into the receiver 10. The third surface SF3 of the rhombic prism 20 provides two prism output ports Po1 and Po2, and the second surface SF2 of the rhombic prism 20 provides another two prism output ports Po3 and Po4.

The prism output ports Po1 and Po2 provided by the third surface SF3, and the first optical receiver unit 40 are connected via a first group of free-beam connections FBC1. The prism output ports Po3 and Po3 of the second surface SF2 and the second optical receiver unit 50 are connected via a second group of free-beam connections FBC2. The free-beam connections of the first and second group of free-beam connections FBC1 and FBC2 are preferably equidistant and parallel.

Figure 1 also shows the second prism 30 in further detail. The second prism 30 provides a fifth surface SF5 and a sixth surface SF6. The fifth surface SF5 is parallel to the third surface SF3 of the rhombic prism 20, and the sixth surface SF6 is parallel to the first and second surfaces SF1, SF2 of the rhombic prism 20.

Preferably, the fifth surface of the second prism is directly mounted on the polarization dependent layer PDL that covers the third surface SF3 of the rhombic prism 20. As such, the second prism 30 is arranged in the beam path between the third surface SF3 of the rhombic prism 20 and the first optical receiver unit 40.

The optical receiver 10 may be operated as follows:
A first optical beam A and a second optical beam B are directed towards the first surface SF1 of the rhombic prism 20 and enter the rhombic prism 20 at the input ports Pi1 and Pi2.

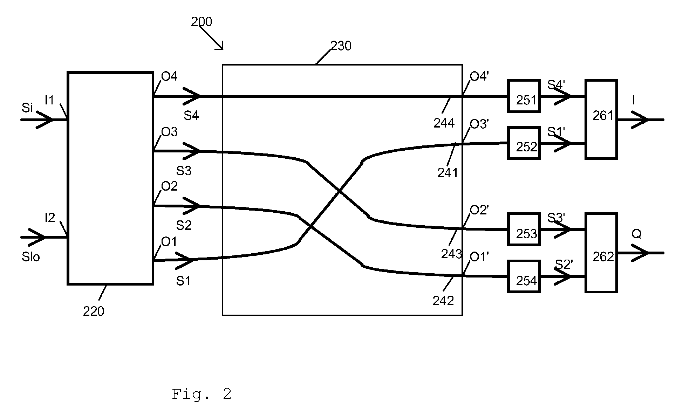

In an exemplary fashion, it is assumed hereinafter that the horizontal and vertical polarizations of beam A each transmit a QPSK-modulated signal Si (see Figure 2), and that the horizontal and vertical polarizations of beam B each transmit a local oscillator signal Slo (see Figure 2).

When the beams A and B reach the third surface SF3 and the polarization dependent layer PDL, they are partly transmitted and partly reflected.

A first portion A1, namely the horizontally polarized portion, of the first beam A is transmitted and leaves the rhombic prism 20 at the output port Po1. A first portion B1, namely the horizontally polarized portion, of the second beam B is also transmitted and leaves the rhombic prism 20 at the output port Po2. Both portions A1 and B1 are passing the second prism 30 and reach input ports E1 and E2 of the first receiver unit 40. The first receiver unit 40 receives the horizontally polarized portions A1 and B1 and generates demodulated electrical QPSK-signals I and Q with reference to the horizontal polarization of beams A and B, only, as will be explained in further detail with reference to Figure 2.

A second portion A2, namely the vertically polarized portion, of the first beam A and a second portion B2, namely the vertically polarized portion, of the second beam B are reflected by the polarization dependent layer PDL and the third and fourth surfaces SF3 and SF4, and leave the rhombic prism 20 at output ports Po3 and Po4.

The polarizations of both vertically polarized portions A2 and B2 are rotated by the polarization rotating layer PRL such that horizontally polarized portions A2' and B2' reach input ports E1 and E2 of the second receiver unit 50. The second receiver unit 50 generates demodulated electrical QPSK-signals I and Q with reference to the vertical polarization of beams A and B, only, as will be explained in further detail with reference to Figure 2.

Figure 2 shows an embodiment of a receiver unit 200 which can be used as receiver unit 40 or receiver unit 50 in the optical receiver 10 of Figure 1.

The receiver unit 200 comprises a multimode waveguide coupler 220 which forms a six-port 90°optical hybrid device. Instead of a multimode waveguide coupler, any other type of coupler may be incorporated into receiver unit 200, such as other types of 90°-hybrids or other types of couplers, for instance couplers based on internal 3dB-splitters and internal phase shifters.

The waveguide coupler 220 has two optical inputs I1 and I2 and four optical outputs O1, 02, 03 and 04.

Inputs I1 and I2 may be used to enter a QPSK-modulated signal Si (e. g. beam portion A1 or A2' in Figure 1) and a local oscillator signal Slo (e. g. beam portion B1 or B2' in Figure 1) into the coupler 220.

Optical signals S1-S4, which leave the coupler outputs O1-O4, have phase differences between each other of 90° or multiple thereof. Supposing that signal S1, which leaves output O1, has a phase of 180°, signals S2, S3 and S4, which leave outputs 02, 03 and 04, will have phases of 270°, 90°, and 0°, respectively.

The multimode coupler 220 is connected to a connection network 230 which comprises four connecting waveguides 241, 242, 243 and 244. These waveguides connect the coupler outputs O1, 02, 03 and 04 with outputs O1', 02', 03', and 04' of the connection network 230.

The outputs O1', 02', 03', and 04' of the connection network 230 are connected to photodiodes 251-254 which absorb the electromagnetic signals S1-S4 transmitted by waveguides 241, 242, 243 and 244, respectively, and generate electrical signals S1'-S4'. Two differential amplifiers 261 and 262 that are each connected to two of the photodiodes 251-254, generate demodulated electrical QPSK signals I and Q.

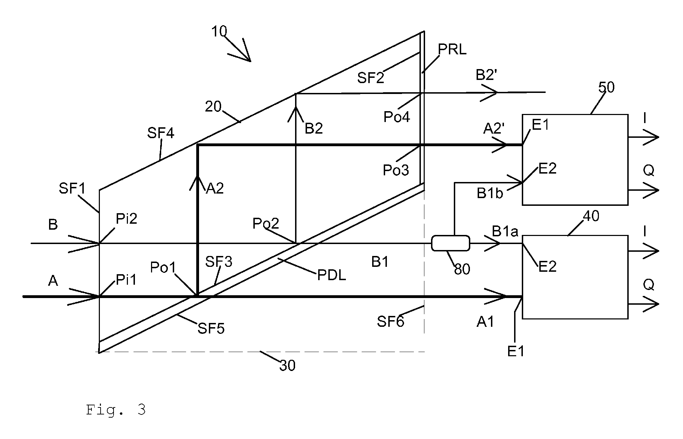

Figure 3 shows a second exemplary embodiment of an optical component for processing optical signals. The optical component is an optical receiver 10 and comprises a first prism 20, a second prism 30 and two receiver units 40 and 50, as described with reference to Figure 1.

In contrast to the embodiment of Figure 1, a beam splitter 80 is placed in the beam path between the second prism 30 and the first receiver unit 40. The beam splitter 80 splits the first horizontally polarized portion B1 of the second beam B and generates a first horizontally polarized part B1a and a second horizontally polarized part B1b.

The first horizontally polarized part B1a reaches the first receiver unit 40. The first receiver unit 40 uses the first horizontally polarized part B1a and the first horizontally polarized portion A1 to generate demodulated electrical QPSK-signals I and Q as discussed with reference to Figure 1.

The second horizontally polarized part B1b reaches the second receiver unit 50. The second horizontally polarized part B1b and the second horizontally polarized portion A2' are subjected to demodulation by the second receiver unit 50 as discussed with reference to Figure 1. As such, the second horizontally polarized portion B2' of the second beam B may be discarded, since it is replaced by the second horizontally polarized part B1b of the first portion B1.

For operation of the embodiment of Figure 3, each of the horizontal and vertical polarizations of beam A preferably transmits a QPSK-modulated signal Si. The horizontally polarized portion B1 of beam B preferably transmits a local oscillator signal Slo (see Figure 2). As such, the horizontally polarized portion B1 may be used to de-multiplex both the horizontal polarization and the vertical polarization of beam A.

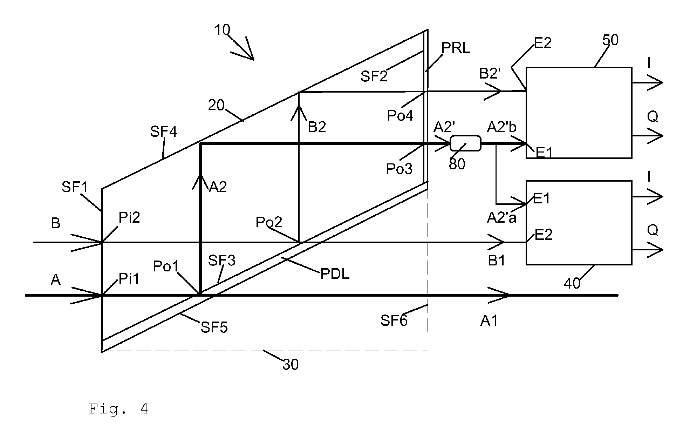

Figure 4 shows a third exemplary embodiment of an optical component for processing optical signals. The optical component is an optical receiver 10 and comprises a first prism 20, a second prism 30 and two receiver units 40 and 50, as described with reference to Figure 1.

In contrast to the embodiment of Figure 1, a beam splitter 80 is placed in the beam path between the first prism 20 and the second receiver unit 50. The beam splitter 80 splits the second horizontally polarized portion A2' of the first beam A and generates a first horizontally polarized part A2'a and a second horizontally polarized part A2'b.

For operation of the embodiment of Figure 4, each of the horizontal and vertical polarizations of beam B preferably transmits a QPSK-modulated signal Si (see Figure 2). The horizontally polarized portion A2' of beam A preferably transmits a local oscillator signal Slo (see Figure 2). As such, the horizontally polarized portion A2' may be used to de-multiplex both the horizontal polarization and the vertical polarization of beam B.

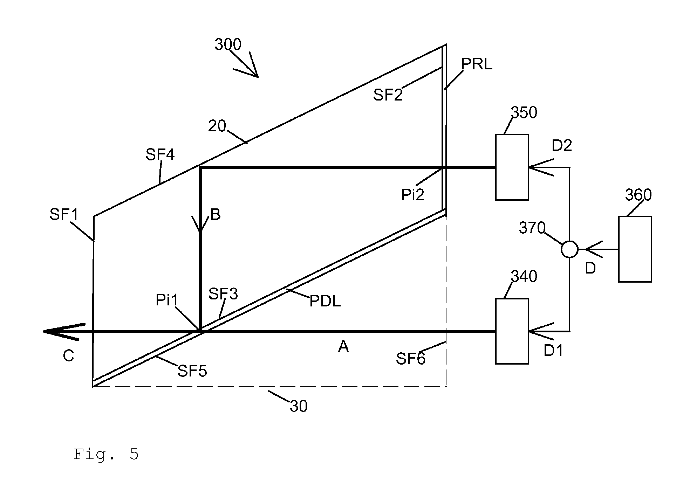

Figure 5 shows a fourth exemplary embodiment of an optical component for processing optical signals. The optical component is an optical transmitter 300 and comprises a first prism 20, a second prism 30, two I/Q modulators 340 and 350, an emitter 360, and a splitter 370.

The first prism 20 is a rhombic prism that has a first surface SF1, a second surface SF2, a third surface SF3, and a fourth surface SF4. The second prism 30 has a fifth surface SF5, and a sixth surface SF6. The rhombic prism 20 and the second prism 30 of Figure 5 may be identical with the prisms 20 and 30 of Figure 1, respectively.

In the embodiment of Figure 5, the second surface SF2 is covered with a polarization rotating layer PRL that rotates the polarization of radiation which passes through. The polarization rotating layer PRL rotates the polarization preferably by an angle of 90°. The third surface SF3 is covered with a polarization dependent layer PDL that transmits a single polarization (e. g. the horizontal polarization), only, and reflects the other.

As such, the third surface SF3 of the rhombic prism 20 forms a first prism ingress Pi1 for inputting an optical beam A having the first polarization (e. g. horizontal polarization), and the second surface SF2 of the rhombic prism 20 forms a second prism ingress Pi2 for inputting an optical beam B having a perpendicular polarization (i.e. the vertical polarization).

The polarization dependent layer PDL and the third surface SF3 of the rhombic prism 20 overlay or combine the optical beams A and B, and form an output beam C that carries both polarizations. The combined beam C is outputted at the first surface SF1.

Beam A may carry an I/Q-modulated optical signal. In order to generate beam A, the I/Q modulator 340 modulates a portion D1 of an optical beam D that is emitted by the emitter 360 (e. g. a laser diode).

Beam B originates from the I/Q modulator 350 that modulates the other portion D2 of the optical beam D. The polarization of beam B is perpendicular to the polarization of beam A since the polarization of beam B is rotated by the polarization rotating layer PRL before entering the rhombic prism 20. In summary, the optical transmitter 300 of Figure 5 is capable of generating an output beam C that comprises a horizontally polarized I/Q-modulated signal beam A and a vertically polarized I/Q-modulated signal beam B. Both I/Q-modulated signal beams A and B are I/Q-modulated separately and may carry different information.

### Reference Signs

- 10: optical receiver
- 20: rhombic prism
- 30: prism
- 40: receiver unit
- 50: receiver unit
- 80: beam splitter
- 200: receiver unit
- 220: optical coupler
- 230: connection network
- 241-244: connecting waveguide
- 251-254: photodiode
- 261-262: differential amplifier
- 300: optical transmitter
- 340, 350: I/Q modulator
- 360: emitter
- 370: splitter

- A: optical beam
- A1: first portion
- A2: second portion
- A2': horizontally polarized portion
- A2'a: first horizontally polarized part
- A2'b: second horizontally polarized part
- B: optical beam
- B2': horizontally polarized portion
- B1: first portion
- B2: second portion
- B1a: first horizontally polarized part
- B1b: second horizontally polarized part
- C: optical beam
- D: optical beam

- D1: portion of optical beam D
- D2: portion of optical beam D
- E1: input port
- E2: input port
- FBC1: group of free-beam connections
- FBC2: group of free-beam connections
- I: demodulated electrical QPSK signal
- I1, I2: optical input
- O1-O4: optical output
- O1'-O4': outputs of the connection network
- PDL: polarization dependent layer
- Pi1, Pi2: prism input ports
- Po1, Po2: prism output port
- Po3, Po4: prism output port
- PRL: polarization rotating layer
- Q: demodulated electrical QPSK signal
- Si: QPSK-modulated signal
- SF1, SF2: surface
- SF3, SF4: surface
- SF5, SF6: surface
- Slo: local oscillator signal
- S1-S4: electromagnetic signal
- S1'-S4': electrical signal

## Claims

1. Optical component (10, 300) for processing optical signals,
**characterized by**
a rhombic prism (20) having
- a first surface (SF1),
- a second surface (SF2) that is parallel to the first surface,
- a third surface (SF3) that is angled relative to the first and second surfaces (SF1, SF2) and connects the first and second surfaces (SF1, SF2), and
- a fourth surface (SF4) that is parallel to the third surface and connects the first and second surfaces,
- wherein the third surface (SF3) is covered by a polarization dependent layer (PDL) capable of transmitting radiation having a first polarization and capable of reflecting radiation having a second polarization, said first and second polarizations being perpendicular to each other.

2. Optical component according to claim 1,
**characterized in that**
the optical component is an optical receiver (10),
- wherein the first surface (SF1) of the rhombic prism (20) is configured to allow inputting of at least one optical beam into the receiver,
- wherein the third surface (SF3) of the rhombic prism (20) forms a first prism egress for outputting a first portion of the at least one optical beam, said first portion having the first polarization, and wherein the third surface (SF3) is configured to reflect a second portion of the at least one optical beam towards the fourth surface (SF4), said second portion having the second polarization,
- wherein the fourth surface SF4) of the rhombic prism (20) is configured to reflect the second portion towards the second surface (SF2), and
- wherein the second surface (SF2) of the rhombic prism (20) forms a second prism egress for outputting the second portion of the at least one optical beam.

3. Optical component according to claim 2,
**characterized in that**
- the first surface (SF1) of the rhombic prism (20) provides at least two input ports for inputting at least two parallel optical beams into the receiver (10),
- the third surface (SF3) of the rhombic prism (20) provides at least two prism output ports for outputting the first portion of each of said at least two parallel optical beams, and
- the second surface (SF2) of the rhombic prism (20) provides at least two prism output ports for outputting the second portion of each of said at least two parallel optical beams.

4. Optical component according to claim 3,
**characterized in that**
the second surface (SF2) of the rhombic prism (20) is covered with a polarization rotating layer (PRL) that rotates the polarization of the second portion of each of said at least two parallel optical beams by an angle of 90°.

5. Optical component according to any of the preceding claims 2-4,
**characterized in that**
the optical component comprises a first optical receiver unit (40) and a second optical receiver unit (50).

6. Optical component according to claim 5,
**characterized in that**
- said at least two prism output ports of the third surface (SF3) and the first optical receiver unit (40) are connected via a first group of free-beam connections (FBC1), and
- said at least two prism output ports of the second surface (SF2) and the second optical receiver unit (50) are connected via a second group of free-beam connections (FBC2).

7. Optical component according to claim 6,
**characterized in that**
- the first optical receiver unit (40) comprises a MMI coupler (220) having two MMI-ports each of which being connected to one of said at least two prism output ports of the second or third surface (SF2, SF3), and
- the second optical receiver unit (50) comprises a second MMI-coupler having two MMI-ports each of which being connected to one of said at least two prism output ports of the second or third surface (SF2, SF3).

8. Optical component according to any of the preceding claims 2-7,
**characterized in that**
the optical component comprises a second prism (30) providing a fifth surface (SF5) and a sixth surface (SF6), said second prism (30) being arranged in the beam path between the third surface (SF3) of the rhombic prism (20) and the first optical receiver unit (40),
- wherein the fifth surface (SF5) is parallel to the third surface (SF3) of the rhombic prism (20), and
- wherein the sixth surface (SF6) is parallel to the first and second surfaces (SF1, SF2) of the rhombic prism (20).

9. Optical component according claim 1,
**characterized in that**
the optical component is an optical transmitter (300),
- wherein the first surface (SF1) of the rhombic prism (20) is configured to allow outputting of at least one optical beam that comprises the first and second polarizations, from the transmitter (300),
- wherein the third surface (SF3) of the rhombic prism (20) forms a first prism ingress for inputting at least one optical beam having the first polarization, and
- wherein the second surface (SF2) of the rhombic prism (20) forms a second prism ingress for inputting at least one optical beam having the second polarization.

10. Optical component according to claim 9,
**characterized in that**
the optical component comprises a second prism (30) providing a fifth surface (SF5) and a sixth surface (SF6), said second prism (30) being arranged in the beam path between the third surface (SF3) of the rhombic prism (20) and a modulator,
- wherein the fifth surface (SF5) is parallel to the third surface (SF3) of the rhombic prism (20), and
- wherein the sixth surface (SF6) is parallel to the first and second surfaces (SF1, SF2) of the rhombic prism (20).

11. Optical component according to any of the preceding claims,
**characterized in that**
the first polarization is the horizontal polarization, and the second polarization is the vertical polarization.

12. Optical component according to any of the preceding claims,
**characterized in that**
the second surface (SF2) of the rhombic prism (20) or sixth surface (SF6) of the second rhombic prism (30) is covered with a polarization rotating layer that rotates the polarization of optical radiation by an angle of 90°.

13. Optical component according to any of the preceding claims,
**characterized in that**
the polarization rotating layer is a half-wave plate.
